(19) Europäisches Patentamt / European Patent Office / Office européen des brevets

(11) **EP 2 290 808 B1**

(12) **EUROPÄISCHE PATENTSCHRIFT**

(45) Veröffentlichungstag und Bekanntmachung des Hinweises auf die Patenterteilung:
**23.01.2013 Patentblatt 2013/04**

(51) Int Cl.:
**H02P 23/14** *(2006.01)*    **G05B 13/04** *(2006.01)*

(21) Anmeldenummer: **09168914.1**

(22) Anmeldetag: **28.08.2009**

(54) **Verfahren zur Bestimmung eines Skalierungsfaktors eines elektrischen Antriebssystems sowie zugehörige Einrichtung und zugehöriges elektrisches Antriebssystem**

Method for determining a scaling factor of an electrical drive system, corresponding device and corresponding electrical drive system

Procédé de détermination du facteur d'échelonnage d'un système d'entraînement électrique ainsi que dispositif correspondant et système d'entraînement électrique correspondant

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**02.03.2011 Patentblatt 2011/09**

(73) Patentinhaber: **Baumüller Anlagen-Systemtechnik GmbH & Co. KG**
**90482 Nürnberg (DE)**

(72) Erfinder: **Liu, Biao**
**90480, Nürnberg (DE)**

(74) Vertreter: **Götz, Georg Alois**
**Intellectual Property IP-GÖTZ**
**Patent- und Rechtsanwälte**
**Am Literaturhaus, Königstrasse 70**
**90402 Nürnberg (DE)**

(56) Entgegenhaltungen:
**EP-A- 1 388 732     US-A- 5 272 423**
**US-A- 5 448 145     US-A- 5 541 883**
**US-A- 6 037 736     US-A1- 2005 267 609**
**US-B1- 6 470 225**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Bestimmung eines Skalierungsfaktors eines elektrischen Antriebssystems zur Umrechnung einer Beschleunigung des elektrischen Antriebssystems in einen momentbildenden Strom im Rahmen einer Lage- und/oder Drehzahlregelung des elektrischen Antriebssystems sowie eine entsprechende Einrichtung zur Bestimmung des Skalierungsfaktors und ein elektrisches Antriebssystem, ausgebildet mit einer solchen Einrichtung.

Der erfindungsgemäß zu bestimmende Skalierungsfaktor, oft auch kurz als Faktor $K_s$ bezeichnet, dient somit dazu, den Ausgangswert einer Lage- bzw. Drehzahlregelung eines elektrischen Antriebssystems von einem Beschleunigungswert in den momentbildenden Strom umzurechnen. Der Skalierungsfaktor $K_s$ ist abhängig vom gesamten Trägheitsmoment J des Antriebssystems und der Momentkonstante des Motors bzw. Antriebs, $K_t$, und zwar derart, dass die Beziehung $K_s = K_t / J$ gilt. Der Skalierungsfaktor $K_s$ ist ein Maß für das Beschleunigungsvermögen des jeweiligen elektrischen Antriebssystems. Der Faktor $K_s$ wird unabdingbar für die Beschleunigungsvorsteuerung und für eine gültige Beurteilung der Reglereinstellung beispielsweise im Rahmen einer Drehzahlregelung benötigt.

Bisher ist es meist üblich, den Skalierungsfaktor $K_s$ beim Beschleunigen und Bremsen des Antriebs mit einer klein eingestellten Momentstromgrenze zu bestimmen. Dabei wird einerseits die Zeit, andererseits die Änderung der Geschwindigkeit des Antriebs gemessen, während der Momentstrom an der vorgegebenen Grenze gehalten wird. Weitere bekannte Bestimmungsverfahren bestehen in der Einprägung eines konstanten Momentstroms bzw. in der Durchführung von Rechnungen mit theoretischen Werten. Oft erfolgt statt der Bestimmung von $K_s$ auch eine Bestimmung des Trägheitsmoments, indem die Momentkonstante bzw. Drehmomentkonstante des Motors, $K_t$, als bekannt und sich nicht ändernd betrachtet wird.

Bei den Verfahren, die von einer klein eingestellten Momentstromgrenze ausgehen, besteht das Problem, dass diese Grenze abhängig von der jeweiligen Anwendung sehr unterschiedlich sein kann und außerdem die einzustellende Beschleunigung sehr groß ist. Die Messung wird oft manuell durchgeführt und ist daher vergleichsweise aufwändig. Bei einer theoretischen Berechnung besteht das Problem, dass meist der Wert des Trägheitsmoments der Last fehlt. Bei dem Verfahren, das auf der Einprägung eines konstanten Momentstroms basiert, kann es aufgrund der unterschiedlichen Trägheitsmomente schwierig sein, den passenden Momentstrom für eine einzelne Anwendung auszuwählen. Weiterhin ist zu berücksichtigen, dass die Mechanik des Systems unerwünschterweise von einer solchen Momentstromeinprägung zu Schwingungen angeregt werden kann. Alle Verfahren zur Bestimmung des Skalierungsfaktors, die bisher bekannt sind, beruhen zudem auf der Annahme bzw. Voraussetzung, dass $K_s$ während des Betriebs konstant bleibt. Dies ist in realen System, z.B. bei sich ändernder Last, oft nicht der Fall.

Der Erfindung liegt somit die Aufgabe zugrunde, ein diesbezüglich verbessertes Verfahren zur Bestimmung eines Skalierungsfaktors eines elektrischen Antriebssystems zur Umrechnung einer Beschleunigung des elektrischen Antriebssystems in einen momentbildenden Strom im Rahmen einer Lage- und/oder Drehzahlregelung des elektrischen Antriebssystems anzugeben.

Zur Lösung dieser Aufgabe ist ein solches Verfahren vorgesehen, das sich dadurch auszeichnet, dass das Antriebssystem in einem ersten Bereich (6) mit einer konstanten Geschwindigkeit ($N_1$) betrieben wird, in einem zweiten Bereich (11) beschleunigt wird und in einem dritten Bereich (12) mit einer konstanten Geschwindigkeit betrieben wird, wobei die Geschwindigkeit und der momentbildende Strom gemessen werden, für den ersten Bereich (6) die Mittelwerte der Geschwindigkeit (mean n1) und des momentbildenden Stroms (mean isq n1) bestimmt werden, für den zweiten Bereich (11) für jede Abtastung der momentbildende Strom aufsummiert (sum isq t1 t2) wird und die Geschwindigkeit (n t2) am Ende des zweiten Bereichs ermittelt wird, für den dritten Bereich (12) die Mittelwerte der Geschwindigkeit (mean n2) und des momentbildenden Stroms (mean isq n2) bestimmt werden, und zur Ermittlung des Skalierungsfaktors ($K_s$) die Mittelwerte des momentbildenden Stroms (mean isq n1, mean isq n2) und der Geschwindigkeit (mean n1, mean n2) sowie der aufsummierte momentbildende Strom (sum isq t1 t2) herangezogen werden.

Im Rahmen des Verfahrens wird somit zunächst unter Verwendung entsprechender Mittel wie Rechnereinrichtungen bzw. Steuerungs- und/oder Regelungseinrichtungen ein Bewegungsmodell des elektrischen Antriebssystems erstellt bzw. auf diesen Einrichtungen implementiert, durch das das Systemverhalten mittels einer Bewegungsgleichung beschrieben wird. Dieses Modell basiert erfindungsgemäß auf einem Bestandteil, der das Trägheitsmoment J ($\omega$, t) des Gesamtsystems enthält, sowie auf einem weiteren Bestandteil, bei dem es sich um einen drehzahlabhängigen Lastanteil handelt, L ($\omega$). Nun werden Messdaten für das elektrische Antriebssystem aufgenommen, die dazu geeignet sind, den Skalierungsfaktor $K_s$, der für die Beschleunigungsvorsteuerung und die Beurteilung der Reglereinstellung benötigt wird, zu bestimmen. Ausgehend von der Bewegungsgleichung empfiehlt sich zweckmäßigerweise die zeitbezogene Aufnahme des Momentstroms bzw. der Geschwindigkeit des Antriebssystems sein. Weitere Details der Bestimmung des Skalierungsfaktors aus dem Bewegungsmodell unter Aufnahme von Messdaten werden nachfolgend genauer dargestellt. Die Modellparameter des Bewegungsmodells werden unter Verwendung der aufgenommenen Messdaten bestimmt. Anschließend kann anhand der Modellparameter der gesuchte Skalierungsfaktor berechnet werden.

Das genannte Verfahren zur Bestimmung des Skalierungsfaktors $K_s$ hat den Vorteil, dass eine Automatisierung für industrielle Anwendungen problemlos möglich ist. Die Inbetriebnahme des elektrischen Antriebssystems bzw. der Start der eigentlichen Lage- und/oder Drehzahlregelung können beschleunigt werden. Die Lageregelung oder Drehzahlregelung kann optimiert werden und es ist auch ohne weiteres möglich, während des Betriebs eine dynamische Änderung des Skalierungsfaktors festzustellen und zu berücksichtigen, die beispielsweise aufgrund einer geänderten Last auftreten kann. Die Erfindung bezieht sich allgemein auf Antriebssysteme, die im Detail unterschiedlich aufgebaut sein können; dennoch ist aus Gründen einer vereinfachten Darstellung im Folgenden hin und wieder nur von einem Antrieb bzw. einem Motor die Rede.

Durch das Bewegungsmodell kann die Summe des Produkts des Trägheitsmoments (genauer des Gesamtträgheitsmoments) mit der zeitlichen Ableitung der Geschwindigkeit des Antriebssystems (dieses Produkt bildet den ersten Summanden) und des drehzahlabhängigen Lastanteils (zweiter Summand) mit dem Produkt der geschwindigkeitsabhängigen Momentkonstante des Antriebssystems bzw. Motors und des von der Geschwindigkeit und der Zeit abhängigen Momentstroms des Antriebssystems in Beziehung gesetzt werden. Das Bewegungsmodell ist dann vorteilhafterweise gegeben durch

$$M(\omega, t) = K_t(\omega)\, isq\,(\omega, t) = J(\omega, t)\, d\omega/dt + L(\omega).$$

Dabei steht $M(\omega,t)$ für das (Bewegungs-)Modell, $K_t(\omega)$ ist die geschwindigkeitsabhängige (Dreh-)Momentkonstante des Motors/Antriebs und $isq(\omega, t)$ ist der Momentstrom in Abhängigkeit von der Geschwindigkeit und der Zeit. Mit $J(\omega, t)$ wird das Trägheitsmoment des Gesamtsystems bezeichnet und $L(\omega)$ steht für den drehzahlabhängigen Lastanteil. Die Geschwindigkeit wird mit $\omega$ bezeichnet, und t steht für die Zeit.

Das Modell setzt somit über die Momentkonstante des Motors den Momentstrom einerseits mit dem Trägheitsmoment, das hierzu mit der zeitlichen Ableitung der Geschwindigkeit des Antriebs bzw. Antriebssystems multipliziert wird, und andererseits mit dem drehzahlabhängigen Lastanteil in eine Beziehung. Über eine Bestimmung der Parameter der Bewegungsgleichung lässt sich anhand dieser Beziehung der gesuchte Skalierungsfaktor berechnen.

Als Messdaten können der Momentstrom und/oder die Geschwindigkeit des Antriebs bzw. Antriebssystems aufgenommen werden, insbesondere der Strom und die Geschwindigkeit, und/oder die Modellparameter des Bewegungsmodells können anhand der Momentstromfunktion des Antriebssystems bestimmt werden.

Unter Messung des Momentstroms und der jeweiligen Geschwindigkeit kann der Momentstrombedarf bei unterschiedlichen Geschwindigkeiten auf Basis des Modells festgestellt werden. Die Momentstromfunktion $isq\,(\omega, t)$ ist gegeben durch

$$isq(\omega, t) = A(\omega, t)\, d\omega/dt + B(\omega),$$

wobei $A(\omega, t)$ eine von der Geschwindigkeit $\omega$ und der Zeit t abhängige Funktion ist, während $B(\omega)$ eine Polynomfunktion der Geschwindigkeit $\omega$ ist und sich aus dem Betrieb des Antriebssystems mit konstanten Geschwindigkeiten ermitteln lässt. Da die vorgenannte Gleichung für den Momentstrom aus der Modellgleichung $M(\omega, t)$ durch Division durch die Momentkonstante $Kt(\omega)$ hervorgeht, lässt sich anhand der Momentstromgleichung auf die Modellparameter rückschließen.

Die Momentstromfunktion kann zur Bestimmung der Modellparameter durch Einführung (einer geeigneten bzw. genügenden Anzahl) von Geschwindigkeitsstützpunkten derart vereinfacht werden, dass der Faktor vor der zeitlichen Ableitung der Geschwindigkeit ein konstanter Parameter wird, dessen Kehrwert den Skalierungsfaktor ergibt. Es werden mindestens so viele Geschwindigkeitsstützpunkte definiert bzw. vorgegeben, dass von einem näherungsweise konstanten Parameter ausgegangen werden kann. Dieser aus dem ursprünglichen Parameter $A(\omega, t)$ hervorgehende konstante Parameter wird mit a bezeichnet. Damit gilt

$$isq(\omega, t) = a\, d\omega/dt + B(\omega)$$

mit dem neuen konstanten Parameter a.

Im Rahmen des Verfahrens können aus (hierzu geeignet aufgenommen) Messdaten wenigstens ein Mittelwert des Momentstroms des Antriebssystems und ein Mittelwert der Geschwindigkeit des Antriebssystems (aus mehreren gemessenen tatsächlichen Geschwindigkeitswerten) für eine bestimmte Zeit des Betriebs des Antriebssystems mit nominell konstanter Geschwindigkeit ermittelt werden, insbesondere zur Bestimmung von Stützpunkten für den Momentstrom für verschiedene Geschwindigkeiten ohne Beschleunigungs- und/oder Bremsanteile.

Das modellbasierte Verfahren stellt so den Momentstrombedarf bei unterschiedlichen Geschwindigkeiten dadurch fest, dass die Mittelwerte des Momentstroms sowie der gemessenen Geschwindigkeit für bzw. über eine bestimmte Zeit / ein Zeitintervall ermittelt werden. Dies ermöglicht die Gewinnung von Stützpunkten für den Momentstrombedarf für unterschiedliche Geschwindigkeiten, ohne dass hierbei Anteile aus Beschleunigungs- bzw. Bremsvorgängen eine Rolle spielten.

Mit besonderem Vorteil kann erfindungsgemäß zur Bestimmung der Modellparameter des Bewegungsmodells und damit des Skalierungsfaktors das Antriebssystem einem einzigen Beschleunigungs- oder Bremsvorgang unterworfen werden. Dadurch, dass eine Bestimmung des Skalierungsfaktors anhand eines einzigen Beschleunigungs- bzw. Bremsvorgangs möglich ist, ist das Modell bzw. ist das Verfahren zur Bestimmung des Skalierungsfaktors für eine dynamische Anpassung des Skalierungsfaktors besonders geeignet.

Selbstverständlich ist es aber ebenso denkbar, dass mehrere Beschleunigungs- und/oder Bremsvorgänge durchgeführt und entsprechende Messwerte aufgenommen werden, um so beispielsweise den Skalierungsfaktor mehrfach zu bestimmen bzw. einen insgesamt besseren bzw. optimierten Wert für den Skalierungsfaktor durch Mittelwertbildung zu erhalten.

Im Rahmen des Verfahrens kann eine Summation der Momentstromfunktion des Antriebssystems über die Zeit vom Anfang bis zum Ende eines Beschleunigungs- und/oder Bremsvorgangs durchgeführt werden, insbesondere eine Summation der Momentstromfunktion und des drehzahlabhängigen Lastanteils und/oder eine Summation zur Trennung des Momentstromanteils, der zur Beschleunigung und/oder zum Bremsen beiträgt, vom gesamten Momentstrombedarf und/oder zur Beseitigung der Ableitung der Geschwindigkeit im Ausdruck für den Momentstrom. Die Summation bzw. Flächenbildung für die vorgenannte Gleichung für den Momentstrom führt auf die Gleichung

$$\mathrm{sum}(isq(\omega, t)) = a\ \mathrm{sum}(d\omega/dt) + \mathrm{sum}(B(\omega)),$$

die entscheidend für die Bestimmung des Skalierungsfaktors $K_s$ ist. Der Skalierungsfaktor ergibt sich hieraus zu $K_s = 1/a$, also als Kehrwert des Faktors a. Während des Beschleunigungs- bzw. Abbremsvorgangs wird somit der Momentstromanteil, der zur Beschleunigung bzw. zum Bremsen beiträgt, vom gesamten Momentstrombedarf getrennt, indem eine Summation durchgeführt wird bzw. die Fläche des Momentstroms gebildet wird. Durch die Summation entfällt das Differenzieren der Geschwindigkeit bei der Abtastung, woraus sich der Vorteil ergibt, dass der Algorithmus eine große Robustheit erreicht.

Das Antriebssystem kann zur Bestimmung des Skalierungsfaktors mit einem provisorisch schwach eingestellten Lage- und/oder Drehzahlregler und/oder mit einem normal eingestellten Drehzahlregler, insbesondere mit einer für das Antriebssystem vorgesehenen Beschleunigungs- und/oder Ruckbegrenzung, betrieben werden, insbesondere derart, dass nach einer bestimmten Zeit ein Drehzahlsollwert erreicht wird.

Wird der Antrieb mit einem provisorisch schwach eingestellten Lage- bzw. Drehzahlregler und einem normalen Sollwertgenerator, also mit einer für die Maschine vorgesehenen Beschleunigungs- bzw. Ruckbegrenzung betrieben, so wird durch den Integrationsanteil des Drehzahlreglers der Antrieb auch bei schwach eingestellter Regelung den Drehzahlsollwert nach einer bestimmten Zeit erreichen. Durch die beschriebene Mittelwertbildung kann so der Bedarf an Momentstrom bei unterschiedlichen Geschwindigkeiten ermittelt werden.

Wie bereits erwähnt wurde, kann der aus dem drehzahlabhängigen Lastanteil des Bewegungsmodells herrührende Anteil der Momentstromfunktion als Polynomfunktion der Geschwindigkeit aus einem Betrieb des Antriebssystems mit konstanten Geschwindigkeiten ermittelt werden.

Zur Bestimmung des Skalierungsfaktors kann das Antriebssystems nach einem ersten Betrieb mit einer konstanten Geschwindigkeit ungleich null beschleunigt oder gebremst werden und/oder der Anfang und das Ende eines Beschleunigungs- oder Bremsvorgang des Antriebssystems können aus einem Beschleunigungssollwert abgeleitet werden und/oder die Geschwindigkeit des Antriebssystems am Ende eines Beschleunigungs- oder Bremsvorgangs kann bestimmt werden und für die Berechnung eines (des bereits erwähnten) konstanten Parameters, dessen Kehrwert den Skalierungsfaktor ergibt, als optimierte Regelgröße für die Endgeschwindigkeit verwendet werden.

Der Antrieb wird somit zunächst mit einer konstanten Geschwindigkeit betrieben, wobei der Drehzahlregler gegebenenfalls schwach eingestellt sein kann. Der Beginn und das Ende der Beschleunigungsphasen können aus Beschleunigungssollwerten abgeleitet werden. Nachdem der Antrieb über einen längeren Zeitraum mit konstanter Geschwindigkeit betrieben worden ist, werden der Momentstrombedarf und die Geschwindigkeit ermittelt, indem eine Mittelwertbildung durchgeführt wird. Der Antrieb wird dann beispielsweise einem Beschleunigungsvorgang unterworfen, wobei durch Auswertung des Beschleunigungssollwerts bzw. durch Vergleich mit dem Sollwert festgestellt wird, dass sich der Antrieb am Anfang des Beschleunigungsvorgangs befindet. Durch eine weitere Vorgabe bzw. Auswertung eines Beschleunigungssollwerts kann festgestellt werden, wenn sich der Antrieb anschließend am Ende des Beschleunigungsvorgangs befindet. Der Strombedarf zu jeder Abtastung zwischen diesen Zeitpunkten, also zwischen dem Anfang und dem Ende des Beschleunigungsvorgangs, kann danach aufsummiert werden.

Der Geschwindigkeitswert zum Endzeitpunkt, also am Ende des Beschleunigungs- bzw. Bremsvorgangs, kann festgestellt werden, und gegebenenfalls kann die Geschwindigkeit auch gefiltert werden. Nach einer bestimmten Zeit nach dem Ende des Beschleunigungsvorgangs oder des Bremsvorgangs kann erneut eine Ermittlung des Momentstrombedarfs und der Geschwindigkeit durch Mittelwertbildung erfolgen. Aus den ersten Mittelwerten und den zweiten Mittelwerten, also aus den Mittelwerten vor bzw. nach dem Beschleunigungs- oder Bremsvorgang, lassen sich die Modellparameter bestimmen, die dem drehzahlabhängigen Lastanteil zugeordnet sind. Ausgehend von der Darstellung des drehzahlabhängigen Lastanteils beispielsweise als $B(\omega) = b\omega + c$ sind dies somit die Parameter b und c, die anhand der beiden Gleichungen, die sich für die Mittelwerte ergeben, bestimmt werden. Mit Hilfe dieser Parameter und anhand der Summation lässt sich dann der Parameter a berechnen, dessen Kehrwert den gesuchten Skalierungsfaktor darstellt.

Zur Plausibilitätskontrolle kann der Skalierungsfaktor anhand wenigstens eines Beschleunigungsvorgangs und anhand wenigstens eines Bremsvorgangs bestimmt werden und die Ergebnisse können miteinander verglichen werden. Beispielsweise ist es denkbar, dass im Anschluss an den Beschleunigungsvorgang und die zweite Ermittlung des Momentstrombedarfs ein Bremsvorgang durchgeführt wird, für den in gleicher Art und Weise wie zuvor für die Beschleunigung ein Skalierungsfaktor bestimmt wird. Die Abbremsung kann in analoger Form zum Beschleunigungsvorgang durchgeführt werden, so dass die Skalierungsfaktoren, die aus den beiden Vorgängen berechnet werden, ähnlich sein sollten und so einer Plausibilitätskontrolle dienen können. Denkbar ist auch, dass, beispielsweise bei besonders kritischen Anwendungen, das Beschleunigen und Abbremsen mehrfach wiederholt werden, um noch mehr Vergleichswerte zu erhalten. Bei geänderten Verhältnissen im bzw. für das Antriebssystem kann selbstverständlich ebenso eine Neubestimmung eines nun abweichenden Skalierungsfaktors durch einen oder mehrere weitere Beschleunigungs- oder Bremsvorgänge vorgenommen werden.

Mit besonderem Vorteil kann der Skalierungsfaktor automatisiert bestimmt werden und/oder eine Änderung des Skalierungsfaktors während des Betriebs des elektrischen Antriebssystems kann bestimmt werden. Durch die Automatisierung ist eine besonders einfache und wenig aufwändige Bestimmung des Skalierungsfaktors möglich. Weiterhin kann eine während des Betriebs auftretende Änderung des Skalierungsfaktors festgestellt, bestimmt und berücksichtigt werden. Die Inbetriebnahme bzw. die Optimierung der Lage- bzw. Drehzahlregelung kann mit dem erfindungsgemäßen Verfahren verbessert bzw. beschleunigt werden. Des Weiteren lässt sich die Messgenauigkeit verbessern. Entsprechendes gilt für die Maschinensicherheit während der Messung, da der Antrieb unter Lage- bzw. Drehzahlregelung und mit für die Maschine vorgesehenen Beschleunigungs- und Ruckbegrenzungen betrieben wird. Die dynamische Anpassung während des Betriebs kann schnell erfolgen, da die Messung unproblematisch im normalen Betrieb möglich ist.

Darüber hinaus betrifft die Erfindung eine Einrichtung zur Bestimmung eines Skalierungsfaktors eines elektrischen Antriebssystems zur Umrechnung einer Beschleunigung des elektrischen Antriebssystems in einen momentbildenden Strom im Rahmen einer Lage- und/oder Drehzahlregelung des elektrischen Antriebssystems, insbesondere gemäß einem Verfahren wie vorstehend geschildert, wobei die Einrichtung Mittel aufweist, die zur Erstellung eines Bewegungsmodells für das elektrische Antriebssystem ausgebildet sind, welches das Trägheitsmoment des elektrischen Antriebssystems und einen drehzahlabhängigen Lastanteil enthält, und wobei die Einrichtung weiterhin Mittel aufweist, die zur Bestimmung des Skalierungsfaktors unter Aufnahme von Messdaten anhand des Bewegungsmodells ausgebildet sind, wobei die Einrichtung sich dadurch auszeichnet, dass das Antriebssystem in einem ersten Bereich mit einer konstanten Geschwindigkeit betrieben wird, in einem zweiten Bereich beschleunigt wird und in einem dritten Bereich mit einer konstanten Geschwindigkeit betrieben wird, wobei die Geschwindigkeit und der momentbildende Strom gemessen werden, für den ersten Bereich die Mittelwerte der Geschwindigkeit und des momentbildenden Stroms bestimmt werden, für den zweiten Bereich für jede Abtastung der momentbildende Strom aufsummiert wird und die Geschwindigkeit am Ende des zweiten Bereichs ermittelt wird, für den dritten Bereich die Mittelwerte der Geschwindigkeit und des momentbildenden Stroms bestimmt werden, und zur Ermittlung des Skalierungsfaktors die Mittelwerte des momentbildenden Stroms und der Geschwindigkeit sowie der aufsummierte momentbildende Strom herangezogen werden..

Eine solche Einrichtung kann in bzw. bei Werkzeugmaschinen, Druckmaschinen, Textilmaschinen, Verpak-kungsmaschinen und anderen geeigneten Maschinen zum Einsatz kommen. Die Erstellung des Bewegungsmodells sowie die Aufnahme und Auswertung der erforderlichen Messdaten zur Bestimmung des Skalierungsfaktors können beispielsweise mit Hilfe und/oder seitens einer Rechnereinrichtung durchgeführt und/oder initiiert werden, gegebenenfalls auch mittels bzw. unter Verwendung einer bereits vorhandenen Regelungs- und/oder Steuerungseinrichtung eines elektrischen Antriebssystems bzw. einer zugehörigen Maschine.

Für die Messdatenaufnahme, also für die Messung des Stroms bzw. der Drehzahl und/oder Geschwindigkeit können gegebenenfalls bereits bei einem Antriebssystem vorhandene Messeinrichtungen verwendet werden bzw. die Einrichtung zur Bestimmung des Skalierungsfaktors kann hierzu geeignete eigene Messaufnehmer und/oder Sensoren usw. aufweisen. Die Auswertung im Rahmen des vorstehend beschriebenen Algorithmus kann vollautomatisch bzw. bedienerunterstützt erfolgen. Beispielsweise kann der Bediener bestimmte Angaben zu den durchzuführenden Beschleunigungs- oder Abbremsvorgängen machen bzw. auswählen, ob eine Plausibilitätskontrolle durchgeführt werden soll, ob eine dynamische Änderung des Skalierungsfaktors zu erwarten bzw. zu messen ist und dergleichen. Es ist aber ebenso denkbar, dass für einen bestimmten Betriebsvorgang des Antriebssystems oder für die Maschine, die das Antriebssystem umfasst, insgesamt eine vollautomatische Bestimmung des Skalierungsfaktors vorgesehen ist, wozu entsprechende Programme, die gegebenenfalls auch eine Neubestimmung in bestimmten Zeitintervallen oder bei Änderungen im System vorsehen, implementiert sein können.

Dementsprechend kann die Einrichtung zur automatisierten Bestimmung des Skalierungsfaktors und/oder zur Bestimmung einer Änderung des Skalierungsfaktors während des Betriebs des elektrischen Antriebssystems ausgebildet sein. Dies erlaubt eine Optimierung der Regelung des Antriebssystems, da für die Beschleunigungsvorsteuerung und die Beurteilung der Reglereinstellung auf einen zuverlässig bestimmten Skalierungsfaktor zurückgegriffen werden kann.

Des Weiteren betrifft die Erfindung ein elektrisches Antriebssystem, das mit einer Einrichtung wie vorstehend geschildert ausgebildet bzw. zur Durchführung eines Verfahrens wie eingangs beschrieben ausgebildet ist. Hierzu weist das Antriebssystem entsprechende Mittel zur Vorgabe des Bewegungsmodells und zur Bestimmung der Parameter des Bewegungsmodells sowie zur Aufnahme und Auswertung der Messdaten zur schließlichen Bestimmung des Skalierungsfaktors auf. Diese Mittel können im Rahmen einer Steuerung bzw. Regelung des elektrischen Antriebssystems realisiert bzw. in entsprechende bestehende Einrichtungen integriert sein. Beispielsweise können gegebenenfalls benötigte Programmmittel Bestandteile oder Zusatzelemente eines bzw. für ein Regelungsprogramm sein.

Weitere Vorteile, Merkmale und Einzelheiten der Erfindung ergeben sich anhand der folgenden Ausführungsbeispiele sowie aus den Zeichnungen. Dabei zeigen:

Fig. 1    Einen Drehzahlregelkreis, in den der erfindungsgemäß zu bestimmende Skalierungsfaktor eingeht, und

Fig. 2    eine Prinzipdarstellung zur erfindungsgemäßen Bestimmung des Skalierungsfaktors.

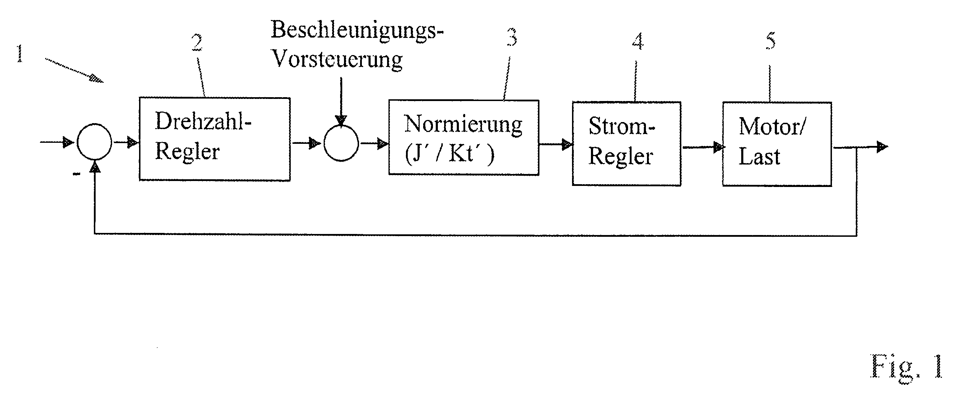

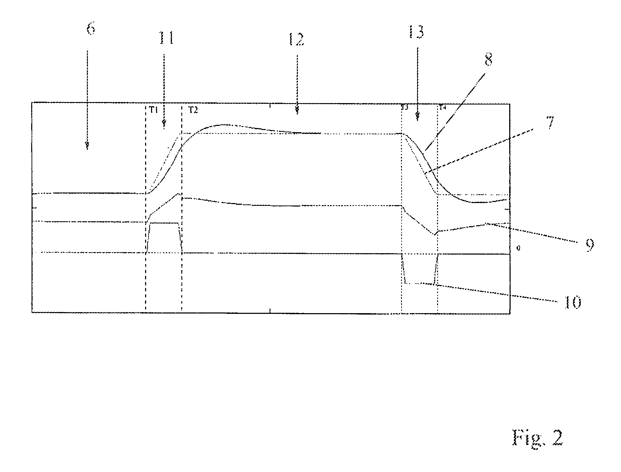

Fig. 1 zeigt einen Drehzahlregelkreis 1 mit einem Drehzahlregler 2. Für die Beschleunigungsvorsteuerung ist der erfindungsgemäß zu ermittelnde Skalierungsfaktor $K_s$ erforderlich. Die Normierung $(J' / K_t')$ ist mit dem Bezugszeichen 3 bezeichnet. Der Skalierungsfaktor $K_s$ entspricht dem Quotienten der Momentkonstante und des gesamten Trägheitsmoments, also $K_t / J$. Die Drehmomentkonstante $K_t$ des Motors und das Gesamtträgheitsmoment J sind im Drehzahlregelkreis 1 jeweils mit einem Strich gekennzeichnet, um anzudeuten, dass es sich um Näherungswerte bzw. Schätzwerte für J bzw. $K_t$ handelt. Weitere Komponenten des Drehzahlregelkreises sind der Stromregler 4 und der Motor bzw. die Last 5. Die erfindungsgemäße Ermittlung des Skalierungsfaktors kann wie nachfolgend zur Fig. 2 beschrieben durchgeführt werden.

Die Ermittlung des Skalierungsfaktors $K_s$ kann gemäß der Darstellung der Fig. 2 erfolgen, bei der es sich um eine Prinzipdarstellung zum erfindungsgemäßen Verfahren handelt. Bei diesem Ausführungsbeispiel zur Ermittlung von $K_s$ wird von einem Lastverhalten ausgegangen, bei dem das Lastmoment linear proportional zur Geschwindigkeit vorausgesetzt wird. Der Antrieb wird zunächst in einem ersten Bereich 6 mit einer konstanten Geschwindigkeit $N_1$ mit $N_1$ ungleich null betrieben, wobei der Drehzahlregler schwach eingestellt sein kann. Die Kurve 7 der Fig. 2 zeigt die Soll-Geschwindigkeit, die Kurve 8 die Ist-Geschwindigkeit, die Kurve 9 den Momentenstrom und die Kurve 10 die Beschleunigung. Beginn und Ende der Beschleunigungsphasen werden aus den Beschleunigungssollwerten abgeleitet. Nachdem der Antrieb über einen bestimmten längeren Zeitraum mit der konstanten Geschwindigkeit $N_1$ ($N_1$ bezeichnet die vorgegebene bzw. Sollgeschwindigkeit) betrieben worden ist, werden der Momentenstrombedarf und die (gemessene) Geschwindigkeit durch Mittelwertbildung bestimmt, das heißt, es werden die Mittelwerte mean_n1 (Geschwindigkeit) und mean_isq_n1 (zugehöriger mittlerer Momentstrombedarf) gebildet.

Danach wird der Antrieb im Bereich 11 einem Beschleunigungsvorgang unterworfen. Durch die Auswertung des Beschleunigungssollwerts kann festgestellt werden, dass sich der Antrieb am Anfang des Beschleunigungsvorgangs befindet, wobei der Beschleunigungsvorgang in der Fig. 2 zum Zeitpunkt T1 beginnt.

Durch Auswertung des Beschleunigungssollwerts wird im weiteren Verlauf festgestellt, dass sich der Antrieb nun am Ende des Beschleunigungsvorgangs befindet, in der Fig. 2 zum Ende des zweiten Bereichs 11 zum Zeitpunkt T2.

Anschließend wird der Strombedarf von T1 bis T2 zu jeder Abtastung aufsummiert, als sum_isq_t1_t2.

Der Geschwindigkeitswert bei Zeitpunkt T2 wird festgestellt und als n_t2 bezeichnet. Diese Geschwindigkeit kann je nach Qualität der Auswertung gegebenenfalls gefiltert werden.

Im anschließenden dritten Bereich 12 der Fig. 2 werden nach einer gewissen Zeit nach dem Zeitpunkt T2 der Momentstrombedarf und ebenso die Geschwindigkeit $N_2$ durch Mittelwertbildung ermittelt, woraus sich die Werte mean_isq_n2 und mean_n2 ergeben.

Das erfindungsgemäße, zugrunde liegende Bewegungsmodell $isq(\omega, t) = A(\omega, t) \, d\omega/dt + B(\omega)$ lässt sich, bei genügend Stützpunkten für den jeweiligen Beschleunigungs- bzw. Abbremsvorgang, vereinfacht darstellen als

$$isq(\omega, t) = a * d\omega/dt + b * \omega + c,$$

wobei a eine Konstante ist.

Für die Bestimmung der Modellparameter b und c werden die Gleichungen für die Strommittelwerte herangezogen,

$$mean\_isq\_n1 = b * mean\_n1 + c \text{ und}$$

und

$$mean\_isq\_n2 = b * mean\_n2 + c.$$

Nachdem die Parameter b und c bestimmt worden sind, lässt sich der Parameter a und damit auch der Skalierungsfaktor $K_s$ berechnen. Der Parameter a ergibt zu

$$a = [sum\_isq\_t1\_t2 - b * sum\_n\_t1\_t2 - c *(t2-t1)] / (n\_t2 - mean\_n1),$$

wobei für den Skalierungsfaktor $K_s$ (hier für den ersten Skalierungsfaktor $K_s1$) die Beziehung

$$K_s1 = 1/a \text{ gilt.}$$

gilt.

Für den vierten Bereich 13, in dem zwischen den Zeitpunkten T3 und T4 ein Abbremsvorgang durchgeführt wird, gilt entsprechend zunächst für den Parameter a und damit dann für den zweiten Skalierungsfaktor $K_s2$ :

$$a = [sum\_isq\_t3\_t4 - b * sum\_n\_t3\_t4 - c *(t4-t3)] / (n\_t4 - mean\_n2), \text{ mit } K_s2 = 1/a.$$

Im vorliegenden Beispiel sollten sich für die beiden Bestimmungen des Skalierungsfaktors $K_s1$ und $K_s2$ ähnliche Ergebnisse ergeben. Durch einen Vergleich der beiden Ergebnisse kann eine Plausibilitätskontrolle der Bestimmung des Faktors erfolgen.

Damit ist erfindungsgemäß anhand des Bewegungsmodells, das von dem Trägheitsmoment und einem drehzahlabhängigen Lastanteil ausgeht, unter Bestimmung einer Funktion für die Ermittlung der Modellparameter und durch Summation des Stroms bzw. der Drehzahl sehr robust eine Bestimmung des Skalierungsfaktors $K_s$ möglich. Die erfindungsgemäße Faktorbestimmung kann anhand eines einzigen Beschleunigungs- oder Bremsvorgangs erfolgen und ist somit ohne weiteres für eine dynamische Anpassung während des Betriebs geeignet. Die Bestimmung des Skalierungsfaktors kann daher für industrielle Anwendungen in unterschiedlichen Bereichen automatisiert werden.

**Bezugszeichenliste**

1    Drehzahlregelkreis
2    Drehzahlregler

| $K_s$ | Skalierungsfaktor |
|---|---|
| 3 | Normierung |
| $K_t$ | Drehmomentkonstante |
| J | Gesamtträgheitsmoment |
| 4 | Stromregler |
| 5 | Motor bzw. Last |
| 6 | erster Bereich |
| $N_1$ | konstant vorgegebene Geschwindigkeit |
| 7 | Kurve |
| 8 | Kurve |
| 9 | Kurve |
| 10 | Kurve |
| 11 | Bereich |
| T1 | Zeitpunkt |
| T2 | Zeitpunkt |
| 12 | Bereich |
| $N_2$ | konstant vorgegebene Geschwindigkeit |
| 13 | Bereich |
| T3 | Zeitpunkt |
| T4 | Zeitpunkt |
| M | Bewegungsmodell |
| L | drehzahlabhängiger Lastanteil |
| $\omega$ | Geschwindigkeit |
| isq | Momentstrom |

**Patentansprüche**

1. Verfahren zur Bestimmung eines Skalierungsfaktors ($K_s$) eines elektrischen Antriebssystems zur Umrechnung einer Beschleunigung des elektrischen Antriebssystems in einen momentbildenden Strom im Rahmen einer Lage- und/ oder Drehzahlregelung des elektrischen Antriebssystems, wobei ein Bewegungsmodell (M) für das elektrische Antriebssystem erstellt wird, das das Trägheitsmoment (J) des elektrischen Antriebssystems und einen drehzahlabhängigen Lastanteil (L) enthält, und dass der Skalierungsfaktor ($K_s$) unter Aufnahme von Messdaten anhand des Bewegungsmodells (M) bestimmt wird **dadurch gekennzeichnet, dass** das Antriebssystem in einem ersten Bereich (6) mit einer konstanten Geschwindigkeit ($N_1$) betrieben wird, in einem zweiten Bereich (11) beschleunigt wird und in einem dritten Bereich (12) mit einer konstanten Geschwindigkeit betrieben wird, wobei die Geschwindigkeit und der momentbildende Strom gemessen werden, für den ersten Bereich (6) die Mittelwerte der Geschwindigkeit (mean_n1) und des momentbildenden Stroms (mean_isq_n1) bestimmt werden, für den zweiten Bereich (11) für jede Abtastung der momentbildende Strom aufsummiert (sum_isq_t1_t2) wird und die Geschwindigkeit (n_t2) am Ende des zweiten Bereichs ermittelt wird, für den dritten Bereich (12) die Mittelwerte der Geschwindigkeit (mean_ n2) und des momentbildenden Stroms (mean_isq_n2) bestimmt werden, und zur Ermittlung des Skalierungsfaktors ($K_s$) die Mittelwerte des momentbildenden Stroms (mean_isq_n1, mean_isq_n2) und der Geschwindigkeit (mean_ n1, mean_n2) sowie der aufsummierte momentbildende Strom (sum_isq_t1_t2) herangezogen werden.

2. Verfahren nach Anspruch 1, **dadurch gekennzeichnet, dass** durch das Bewegungsmodell (M) die Summe des Produkts des Trägheitsmoments (J) mit der zeitlichen Ableitung der Geschwindigkeit ($\omega$) des Antriebssystems und des drehzahlabhängigen Lastanteils (L) mit dem Produkt der geschwindigkeitsabhängigen Momentkonstante ($K_t$) des Antriebssystems und des von der Geschwindigkeit und der Zeit abhängigen Momentstroms (isq) des Antriebssystems in Beziehung gesetzt wird.

3. Verfahren nach einem der vorangehenden Ansprüche, **dadurch gekennzeichnet, dass** als Messdaten der Momentstrom (isq) und/oder die Geschwindigkeit ($\omega$) des Antriebssystems aufgenommen werden und/oder dass die Modellparameter des Bewegungsmodells (M) anhand der Momentstromfunktion (isq($\omega$, t)) des Antriebssystems bestimmt werden.

4. Verfahren nach Anspruch 3, **dadurch gekennzeichnet, dass** die Momentstromfunktion (isq($\omega$, t)) zur Bestimmung der Modellparameter durch Einführung von Geschwindigkeitsstützpunkten derart vereinfacht wird, dass der Faktor (A) vor der zeitlichen Ableitung der Geschwindigkeit ein konstanter Parameter (a) wird, dessen Kehrwert den Ska-

lierungsfaktor ($K_s$) ergibt.

5. Verfahren nach einem der vorangehenden Ansprüche, **dadurch gekennzeichnet, dass** im Rahmen des Verfahrens aus den Messdaten wenigstens ein Mittelwert des Momentstroms (isq) des Antriebssystems und der Geschwindigkeit ($\omega$) des Antriebssystems für eine bestimmte Zeit des Betriebs des Antriebssystems mit nominell konstanter Geschwindigkeit ($N_1$, $N_2$, ..., $N_n$) ermittelt werden, insbesondere zur Bestimmung von Stützpunkten für den Momentstrom (isq) für verschiedene Geschwindigkeiten ohne Beschleunigungs- und/oder Bremsanteile.

6. Verfahren nach einem der vorangehenden Ansprüche, **dadurch gekennzeichnet, dass** zur Bestimmung der Modellparameter des Bewegungsmodells (M) und damit des Skalierungsfaktors ($K_s$) das Antriebssystem nur einem einzigen Beschleunigungs- oder Bremsvorgang oder wenigstens einem Beschleunigungs- und/oder Bremsvorgang unterworfen wird.

7. Verfahren nach einem der vorangehenden Ansprüche, **dadurch gekennzeichnet, dass** im Rahmen des Verfahrens eine Summation der Momentstromfunktion (isq($\omega$, t)) des Antriebssystems über die Zeit vom Anfang bis zum Ende eines Beschleunigungs- und/oder Bremsvorgangs durchgeführt wird, insbesondere eine Summation der Momentstromfunktion (isq(w, t)) und des drehzahlabhängigen Lastanteils (L) und/oder eine Summation zur Trennung des Momentstromanteils, der zur Beschleunigung und/oder zum Bremsen beiträgt, vom gesamten Momentstrombedarf und/oder zur Beseitigung der Ableitung der Geschwindigkeit (w) im Ausdruck für den Momentstrom (isq).

8. Verfahren nach einem der vorangehenden Ansprüche, **dadurch gekennzeichnet, dass** das Antriebssystem zur Bestimmung des Skalierungsfaktors ($K_s$) mit einem provisorisch schwach eingestellten Lage- und/oder Drehzahlregler und/oder mit einem normal eingestellten Drehzahlregler, insbesondere mit einer für das Antriebssystem vorgesehenen Beschleunigungs- und/oder Ruckbegrenzung, betrieben wird, insbesondere derart, dass nach einer bestimmten Zeit ein Drehzahlsollwert erreicht wird.

9. Verfahren nach einem der vorangehenden Ansprüche, **dadurch gekennzeichnet, dass** der aus dem drehzahlabhängigen Lastanteil (L) des Bewegungsmodells (M) herrührende Anteil der Momentstromfunktion (isq($\omega$, t)) als Polynomfunktion (B) der Geschwindigkeit aus einem Betrieb des Antriebssystems mit konstanten Geschwindigkeiten ($N_1$, $N_2$, ..., $N_n$) ermittelt wird.

10. Verfahren nach einem der vorangehenden Ansprüche, **dadurch gekennzeichnet, dass** zur Bestimmung des Skalierungsfaktors ($K_s$) das Antriebssystem nach einem ersten Betrieb mit einer konstanten Geschwindigkeit ($N_1$, $N_2$, ..., $N_n$) ungleich null beschleunigt oder gebremst wird und/oder dass der Anfang und das Ende eines Beschleunigungs- oder Bremsvorgangs des Antriebssystems aus einem Beschleunigungssollwert abgeleitet werden und/oder dass die Geschwindigkeit des Antriebssystems am Ende eines Beschleunigungs- oder Bremsvorgangs bestimmt wird und für die Berechnung eines konstanten Parameters (a), dessen Kehrwert den Skalierungsfaktor ($K_s$) ergibt, als optimierte Regelgröße für die Endgeschwindigkeit verwendet wird.

11. Verfahren nach einem der vorangehenden Ansprüche, **dadurch gekennzeichnet, dass** zur Plausibilitätskontrolle der Skalierungsfaktor ($K_s$) anhand wenigstens eines Beschleunigungsvorgangs und anhand wenigstens eines Bremsvorgangs bestimmt wird und die Ergebnisse miteinander verglichen werden.

12. Verfahren nach einem der vorangehenden Ansprüche, **dadurch gekennzeichnet, dass** der Skalierungsfaktor ($K_s$) automatisiert bestimmt wird und/oder dass eine Änderung des Skalierungsfaktors ($K_s$) während des Betriebs des elektrischen Antriebssystems bestimmt wird.

13. Einrichtung zur Bestimmung eines Skalierungsfaktors ($K_s$) eines elektrischen Antriebssystems zur Umrechnung einer Beschleunigung des elektrischen Antriebssystems in einen momentbildenden Strom im Rahmen einer Lage- und/oder Drehzahlregelung des elektrischen Antriebssystems, insbesondere gemäß einem Verfahren nach einem der vorangehenden Ansprüche, wobei die Einrichtung Mittel aufweist, die zur Erstellung eines Bewegungsmodells (M) für das elektrische Antriebssystem ausgebildet sind, das das Trägheitsmoment (J) des elektrischen Antriebssystems und einen drehzahlabhängigen Lastanteil (L) enthält, sowie Mittel, die zur Bestimmung des Skalierungsfaktors ($K_s$) unter Aufnahme von Messdaten anhand des Bewegungsmodells (M) ausgebildet sind, **dadurch gekennzeichnet, dass** zur Bestimmung des Skalierungsfaktors ($K_s$) das Antriebssystem in einem ersten Bereich (6) mit einer konstanten Geschwindigkeit ($N_1$) betrieben wird, in einem zweiten Bereich (11) beschleunigt wird und in einem dritten Bereich (12) mit einer Bereich mit einer konstanten Geschwindigkeit betrieben wird, wobei die Geschwindigkeit und der momentbildende Strom gemessen werden, für den ersten Bereich (6) die Mittelwerte der Geschwindigkeit (mean_n1) und des momentbildenden Stroms (mean_isq_n1) bestimmt werden, für den zweiten Bereich (11) für jede Abtastung der momentbildende Strom aufsummiert (sum_isq_t1_t2) wird und die Geschwindigkeit (n_t2) am Ende des zweiten Bereichs ermittelt wird, für den dritten Bereich (12) die Mittelwerte der Geschwindigkeit (mean_n2) und des momentbildenden Stroms (mean_isq_n2) bestimmt werden, und zur Ermittlung des Skalierungsfaktors (K$_s$) die Mittelwerte des momentbildenden Stroms (mean_isq_n1, mean_isq_n2) und der Geschwindigkeit (mean_n1, mean_n2) sowie der aufsummierte momentbildende Strom (sum_isq_t1_t2) herangezogen werden.

14. Einrichtung nach Anspruch 13, **dadurch gekennzeichnet, dass** die Einrichtung zur automatisierten Bestimmung des Skalierungsfaktors (K$_s$) und/oder zur Bestimmung einer Änderung des Skalierungsfaktors (K$_s$) während des Betriebs des elektrischen Antriebssystems ausgebildet ist.

15. Elektrisches Antriebssystem, ausgebildet mit einer Einrichtung nach Anspruch 13 oder 14 und/oder zur Durchführung des Verfahrens nach einem der Ansprüche 1 bis 12.

**Claims**

1. A method for determining a scaling factor (K$_s$) of an electrical drive system for converting an acceleration of the electrical drive system into a torque-forming current within the framework of position and/or rotation speed adjustment of the electrical drive system, there being produced for the electrical drive system a movement model (M) that includes the torque of inertia (J) of the electrical drive system and a rotation speed-dependent load proportion (L), and that the scaling factor (K$_s$) is determined by recording measured data by means of the movement model (M), **characterised in that** the drive system is operated in a first range (6) at a constant speed (N$_1$), is accelerated in a second range (11), and in a third range (12) is operated at a constant speed, the speed and the torque-forming current being measured, the mean values for speed (mean_n1) and for the torque-forming current (mean_isq_n1) being determined for the first range (6), the torque-forming current for every sampling being added up (sum_isq_t1_t2) for the second range (11), and the speed (n_t2) at the end of the second range being determined, the mean values for the speed (mean_n2) and for the torque-forming current (mean_isq_n2) being determined for the third range (12), and the mean values for the torque-forming current (mean_isq_n1, mean_isq_n2) and the speed (mean_n1, mean_n2) and of the added up torque-forming current (sum_isq_t1_t2) being used to determine the scaling factor (K$_s$).

2. The method according to Claim 1, **characterised in that** by means of the movement model (M) the sum of the product of the torque of inertia (J) with the temporal derivation, the speed (w) of the drive system and of the rotation speed-dependent load proportion (L) with the product of the speed-dependent torque constant (K$_t$) of the drive system and of the torque current (isq) of the drive system dependent on speed and time are correlated.

3. The method according to any of the preceding claims, **characterised in that** the torque current (isq) and/or the speed (w) of the drive system are recorded as measured data and/or that the model parameters of the movement model (M) are determined by means of the torque current function (isq($\omega$, t)) of the drive system.

4. The method according to Claim 3, **characterised in that** the torque current function (isq($\omega$, t)) is simplified by introducing speed support points in order to determine the model parameters, that the factor (A) before the temporal derivation of the speed becomes a constant parameter (a), the inverse value of which produces the scaling factor (K$_s$).

5. The method according to any of the preceding claims, **characterised in that** within the framework of the method at least a mean value for the torque current (isq) of the drive system and for the speed (w) of the drive system for a specific time of operation of the drive system at nominally constant speed (N$_1$, N2, ..., N$_n$) are determined from the measured data, in particular in order to determine support points for the torque current (isq) for different speeds without acceleration and/or braking proportions.

6. The method according to any of the preceding claims, **characterised in that**, in order to determine the model parameters of the movement model (M) and so of the scaling factor (K$_s$), the drive system is only subjected to a single acceleration or braking procedure or at least one acceleration and/or braking procedure.

7. The method according to any of the preceding claims, **characterised in that** within the framework of the method a summation of the torque current function (isq(w, t)) of the drive system over the time from the start to the end of an acceleration and/or braking procedure is implemented, in particular a summation of the torque current function (isq $(\omega, t)$) and of the rotation speed-dependent load proportion (L) and/or a summation in order to separate the torque current proportion which contributes to the acceleration and/or to the braking, of the entire torque current requirement and/or to eliminate the derivation of the speed (w) in the expression for the torque current (isq).

8.    The method according to any of the preceding claims, **characterised in that** in order to determine the scaling factor ($K_s$) the drive system is operated with a provisionally weakly set position and/or rotation speed adjuster and/or with a normally set rotation speed regulator, in particular with acceleration and/or torque limitation provided for the drive system, in particular such that a rotation speed target value is achieved after a specific time.

9.    The method according to any of the preceding claims, **characterised in that** the proportion of the torque current function (isq($\omega$, t) deriving from the rotation speed-dependent load proportion (L) of the movement model (M) is determined as a polynomial function (B) of the speed from operation of the drive system at constant speeds ($N_1$, $N_2$, ..., $N_n$).

10.    The method according to any of the preceding claims, **characterised in that** in order to determine the scaling factor ($K_s$) the drive system is accelerated or braked after initial operation at a constant speed ($N_1$, $N_2$, ..., $N_n$) unequal to zero and/or that the start and the end of an acceleration or braking procedure of the drive system are derived from an acceleration target value and/or that the speed of the drive system at the end of an acceleration or braking procedure is determined and is used to calculate a constant parameter (a), the inverse value of which produces the scaling factor ($K_s$) as an optimised adjustment value for the final speed.

11.    The method according to any of the preceding claims, **characterised in that** in order to monitor plausibility, the scaling factor ($K_s$) is determined by means of at least one acceleration procedure and by means of at least one braking procedure, and the results are compared with one another.

12.    The method according to any of the preceding claims, **characterised in that** the scaling factor ($K_s$) is determined in an automated manner and/or that a change to the scaling factor ($K_s$) during operation of the electrical drive system is determined.

13.    A device for determining a scaling factor ($K_s$) of an electrical drive system for converting an acceleration of the electrical drive system into a torque-forming current within the framework of position and/or rotation speed adjustment of the electrical drive system, in particular according to a method according to any of the preceding claims, the device having means which are designed to produce a movement model (M) for the electrical drive system that includes the torque of inertia (J) of the electrical drive system and a rotation speed-dependent load proportion (L), and means which are designed to determine the scaling factor ($K_s$) by recording measured data by means of the movement model (M), **characterised in that** in order to determine the scaling factor ($K_s$) the drive system is operated in a first range (6) at a constant speed ($N_1$), is accelerated in a second range (11), and in a third range (12) is operated at a constant speed, the speed and the torque-forming current being measured, the mean values for speed (mean_n1) and for the torque-forming current (mean-_isq_n1) being determined for the first range (6), the torque-forming current for every sampling being added up (sum_isq_t1_t2) for the second range (11), and the speed (n_t2) at the end of the second range being determined, the mean values for the speed (mean_n2) and for the torque-forming current (mean_isq_n2) being determined for the third range (12), and the mean values for the torque-forming current (mean_isq_n1 , mean_isq_n2) and the speed (mean_n1, mean_n2) and for the added up torque-forming current (sum_isq_t1_t2) being used to determine the scaling factor ($K_s$).

14.    The device according to Claim 13, **characterised in that** the device is designed to determine the scaling factor ($K_s$) in an automated manner and/or to determine a change to the scaling factor ($K_s$) during operation of the electrical drive system.

15.    An electrical drive system designed with a device according to Claim 13 or 14 and/or to implement the method according to any of Claims 1 to 12.

**Revendications**

1.    Procédé de détermination d'un facteur de mise à l'échelle ($K_s$) d'un système d'entraînement électrique pour convertir une accélération du système d'entraînement électrique en un courant formant un couple dans le cadre d'une régulation de position et/ou de vitesse du système d'entraînement électrique, dans lequel est créé un modèle de mouvement (M) pour le système d'entraînement électrique, qui contient le moment d'inertie (J) du système d'entraînement électrique et une composante de charge (L) dépendante de la vitesse, et dans lequel le facteur de mise à l'échelle ($K_s$) est déterminé par l'enregistrement de données de mesure à l'aide du modèle de mouvement (M), **caractérisé en ce que** le système d'entraînement fonctionne à une vitesse constante ($N_1$) dans une première plage (6), est accéléré dans une deuxième plage (11) et fonctionne à une vitesse constante dans une troisième plage (12), la vitesse et le courant formant un couple étant mesurés, les valeurs moyennes de la vitesse (mean_n1) et du courant formant un couple (mean_isq_n1) étant déterminées pour la première plage (6), le courant formant un couple étant additionné (sum_isq_t1_t2) pour la deuxième plage (11) pour chaque balayage et la vitesse (n_t2) étant déterminée à la fin de la deuxième plage, les valeurs moyennes de la vitesse (mean_n2) et du courant formant un couple (mean isq_n2) étant déterminées pour la troisième plage (12), et les valeurs moyennes du courant formant un couple (mean_isq_n1, mean_isq_n2) et de la vitesse (mean_n1, mean_n2) ainsi que le courant additionné formant un couple (sum_isq_t1_t2) étant utilisés pour la détermination du facteur de mise à l'échelle ($K_s$).

2. Procédé selon la revendication 1, **caractérisé en ce que** la somme du produit du moment d'inertie (J) par la dérivée temporelle de la vitesse ($\omega$) du système d'entraînement et de la composante de charge (L) dépendante de la vitesse est mise en relation par le modèle de mouvement (M) avec le produit de la constante de couple (Kt) du système d'entraînement, dépendante de la vitesse, par le courant de couple (isq) du système d'entraînement, dépendant de la vitesse et du temps.

3. Procédé selon l'une des revendications précédentes, **caractérisé en ce que** sont enregistrées comme données de mesure le courant de couple (isq) et/ou la vitesse ($\omega$) du système d'entraînement, et/ou **en ce que** les paramètres du modèle de mouvement (M) sont déterminés à l'aide de la fonction de courant de couple (isq($\omega$, t) du système d'entraînement.

4. Procédé selon la revendication 3, **caractérisé en ce que** la fonction de courant de couple (isq($\omega$, t), pour la détermination des paramètres du modèle, est simplifiée par l'introduction de points d'appui de vitesse de façon telle que le facteur (A) devient, avant la dérivée temporelle de la vitesse, un paramètre constant (a) dont l'inverse donne le facteur de mise à l'échelle ($K_s$).

5. Procédé selon l'une des revendications précédentes, **caractérisé en ce que**, dans le cadre du procédé, au moins une valeur moyenne du courant de couple (isq) du système d'entraînement et de la vitesse (w) du système d'entraînement est déterminée à partir des données de mesure pour un moment défini du fonctionnement du système d'entraînement à une vitesse nominalement constante ($N_1$, $N_2$, ....., $N_n$), en particulier pour la détermination de points d'appui pour le courant de couple (isq) pour différentes vitesses sans composantes d'accélération et/ou de freinage.

6. Procédé selon l'une des revendications précédentes, **caractérisé en ce que**, pour la détermination des paramètres du modèle de mouvement (M) et par conséquent du facteur de mise à l'échelle ($K_s$), le système d'entraînement n'est soumis qu'à un seul processus d'accélération ou de freinage ou à au moins un processus d'accélération ou de freinage.

7. Procédé selon l'une des revendications précédentes, **caractérisé en ce que**, dans le cadre du procédé, est exécutée une sommation sur la fonction de courant de couple (isq($\omega$, t) du système d'entraînement pour la période du début à la fin d'un processus d'accélération et/ou de freinage, en particulier une sommation de la fonction de courant de couple (isq($\omega$, t) et de la composante de charge (L) dépendante de la vitesse et/ou une sommation pour séparer la composante de courant de couple qui contribue à l'accélération et/ou au freinage, de la consommation totale de courant de couple et/ou pour éliminer la dérivée de la vitesse ($\omega$) dans l'expression du courant de couple (isq).

8. Procédé selon l'une des revendications précédentes, **caractérisé en ce que**, pour déterminer le facteur de mise à l'échelle ($K_s$), on fait fonctionner le système d'entraînement avec un régulateur de position et/ou de vitesse faiblement réglé de manière provisoire et/ou avec un régulateur de vitesse normalement réglé, en particulier avec une limitation d'accélération et/ou limitation d'à-coups prévue pour le système d'entraînement, en particulier de façon à atteindre une consigne de vitesse après un laps de temps défini.

9. Procédé selon l'une des revendications précédentes, **caractérisé en ce que** la composante de la fonction de courant de couple (isq($\omega$, t), issue de la composante de charge (L) du modèle de mouvement, dépendante de la vitesse, est déterminée en tant que fonction polynôme (B) de la vitesse à partir d'un fonctionnement du système d'entraînement à des vitesses constantes ($N_1$, $N_2$, ...., $N_n$).

10. Procédé selon l'une des revendications précédentes, **caractérisé en ce que**, pour la détermination du facteur de mise à l'échelle ($K_s$), le système d'entraînement est accéléré et/ou freiné après un premier fonctionnement à une vitesse constante ($N_1$, $N_2$, ...., $N_n$) différente de zéro, et/ou **en ce que** le début et la fin d'un processus d'accélération ou de freinage du système d'entraînement sont dérivés d'une valeur de consigne d'accélération, et/ou **en ce que** la vitesse du système d'entraînement est déterminée à la fin d'un processus d'accélération ou de freinage et est utilisée pour le calcul d'un paramètre constant (a), dont la valeur inverse donne le facteur de mise à l'échelle ($K_s$), en tant que grandeur de réglage optimisée de la vitesse finale.

11. Procédé selon l'une des revendications précédentes, **caractérisé en ce que**, pour le contrôle de plausibilité, le facteur de mise à l'échelle ($K_s$) est déterminé à l'aide d'au moins un processus d'accélération et à l'aide d'au moins un processus de freinage et **en ce que** les résultats sont comparés entre eux.

12. Procédé selon l'une des revendications précédentes, **caractérisé en ce que** le facteur de mise à l'échelle ($K_s$) est déterminé automatiquement et/ou **en ce qu'**une modification du facteur de mise à l'échelle ($K_s$) est déterminée pendant le fonctionnement du système d'entraînement électrique.

13. Dispositif destiné à déterminer un facteur de mise à l'échelle ($K_s$) d'un système d'entraînement électrique pour convertir une accélération du système d'entraînement électrique en un courant formant un couple dans le cadre d'une régulation de position et/ou de vitesse du système d'entraînement électrique, en particulier selon un procédé selon l'une des revendications précédentes, où le dispositif présente des moyens conçus pour créer un modèle de mouvement (M) pour le système d'entraînement électrique, qui contient le moment d'inertie (J) du système d'entraînement électrique et une composante de charge (L) dépendante de la vitesse, ainsi que des moyens conçus pour déterminer le facteur de mise à l'échelle ($K_s$) par l'enregistrement de données de mesure à l'aide du modèle de mouvement (M), **caractérisé en ce que**, pour la détermination du facteur de mise à l'échelle ($K_s$), le système d'entraînement fonctionne à une vitesse constante ($N_1$) dans une première plage (6), est accéléré dans une deuxième plage (11) et fonctionne à une vitesse constante dans une troisième plage (12), la vitesse et le courant formant un couple étant mesurés, les valeurs moyennes de la vitesse (mean_n1) et du courant formant un couple (mean_isq_n1) étant déterminées pour la première plage (6), le courant formant un couple étant additionné (sum isq_t1_t2) pour la deuxième plage (11) pour chaque balayage et la vitesse (n_t2) étant déterminée à la fin de la deuxième plage, les valeurs moyennes de la vitesse (mean_n2) et du courant formant un couple (mean_isq_n2) étant déterminées pour la troisième plage (12) et les valeurs moyennes du courant formant un couple (mean_isq_n1, mean_isq_n2) et de la vitesse (mean_n1, mean_n2) ainsi que le courant additionné formant un couple (sum_isq_t1_t2) étant utilisés pour la détermination du facteur de mise à l'échelle ($K_s$).

14. Dispositif selon la revendication 13, **caractérisé en ce que** le dispositif est conçu pour la détermination automatisée du facteur de mise à l'échelle ($K_s$) et/ou pour la détermination d'une modification du facteur de mise à l'échelle ($K_s$) pendant le fonctionnement du système d'entraînement électrique.

15. Système d'entraînement électrique, doté d'un dispositif selon la revendication 13 ou 14 et/ou destiné à la réalisation du procédé selon l'une des revendications 1 à 12.

Fig. 1

Fig. 2